# EUROPÄISCHE PATENTSCHRIFT

(11) **EP 3 476 083 B1**
(45) Veröffentlichungstag und Bekanntmachung des Hinweises auf die Patenterteilung: **05.02.2020**
(21) Anmeldenummer: 17740277.3
(22) Anmeldetag: 08.06.2017
(51) Int. Cl.: H04L 12/40

(54) **SCHNITTSTELLENMODUL, SYSTEM MIT EINEM SCHNITTSTELLENMODUL UND VERFAHREN ZUM KOPPELN VON DATENBUSSEN**
INTERFACE MODULE, SYSTEM HAVING AN INTERFACE MODULE AND METHOD FOR COUPLING DATA BUSES
MODULE D'INTERFACE, SYSTÈME POURVU D'UN MODULE D'INTERFACE ET PROCÉDÉ DE COUPLAGE DE BUSES DE DONNÉES

(30) Priorität: 24.06.2016 DE 102016111672
(43) Veröffentlichungstag der Anmeldung: 01.05.2019
(73) Patentinhaber: Harting Electric GmbH & Co. KG, 32339 Espelkamp (DE)
(72) Erfinder: FRIESEN, Markus, 32339 Espelkamp (DE); TRÖGER, Lutz, 49082 Osnabrück (DE)
(86) Internationale Anmeldenummer: PCT/DE2017/100485
(87) Internationale Veröffentlichungsnummer: WO 2017/220074

(56) Entgegenhaltungen:
- EP-A1- 1 500 994
- EP-A1- 2 110 995
- WO-A1-2013/159985
- DE-A1-102012 202 160

## Beschreibung

Die vorliegende Erfindung betrifft ein Schnittstellenmodul zum Koppeln von Datenbussen mit ersten Signalleitungsanschlüssen, an die Signalleitungen wenigstens eines ersten Datenbusses anschließbar sind, und zweiten Signalleitungsanschlüssen, an die Signalleitungen wenigstens eines zweiten Datenbusses anschließbar sind, das wenigstens eine Verbindungseinrichtung zum Herstellen wenigstens einer Verbindung zwischen einem der ersten Signalleitungsanschlüsse und einem der zweiten Signalleitungsanschlüsse aufweist. Ferner betrifft die Erfindung ein System mit wenigstens einem derartigen Schnittstellenmodul und wenigstens einer Vorrichtung, die wenigstens einen ersten Datenbus und/oder wenigstens eine zweiten Datenbus aufweist, wie auch in der Patentanmeldung EP 2 110 995 A1 beschrieben. Schließlich betrifft die Erfindung ein Verfahren zum Koppeln von Datenbussen mittels eines Schnittstellenmoduls, bei dem Signalleitungen wenigstens eines ersten Datenbusses an erste Signalleitungsanschlüsse des Schnittstellenmoduls und Signalleitungen wenigstens eines zweiten Datenbusses an zweite Signalleitungsanschlüsse des Schnittstellenmoduls angeschlossen werden und wenigstens eine Verbindung zwischen einem der ersten Signalleitungsanschlüsse und einem der zweiten Signalleitungsanschlüsse hergestellt wird.

Viele Vorrichtungen und Gerätschaften sind aus Gründen der Flexibilität mit auswechselbaren Modulen versehen. Beispielsweise können viele Roboterarme mit unterschiedlichen Werkzeugmodulen bestückt werden, wodurch sich die praktischen Einsatzmöglichkeiten von Robotern wesentlich steigern lassen. Damit derartige Funktionsmodule durch die Vorrichtung an der sie angebracht sind gesteuert werden können, muss ein Datenbus des Moduls mit einem Datenbus der Vorrichtung gekoppelt werden. Allerdings weisen unterschiedliche Module in der Regel unterschiedliche Datenbusse oder Bussysteme auf, die sich nicht nur im Hinblick auf ihre Leistungsfähigkeit bei der Daten- oder Signalübertragung sondern auch in der Anzahl und Anordnung ihrer Daten- oder Signalleitungen, Anschlüsse oder Pins unterscheiden können.

Um nun eine Anschlussstelle oder einen Anschlusspunkt einer Vorrichtung zum flexiblen Anschließen möglichst vieler wenn nicht gar aller denkbarer Funktionsmodule einzurichten, ist es einerseits bekannt, alle denkbaren Schnittstellen einzeln vorzuhalten und in einem Steckgesicht nebeneinander bereitzustellen, was auf das Vorsehen einer entsprechend großen Anzahl von Anschlüssen oder Pins in entsprechenden Anordnungen hinausläuft. Eine derartige Lösung ist sowohl platzraubend, kostspielig als auch aufwändig. Andererseits sind für Anschlussstellen oder Anschlusspunkte, die für nur eine einzige Schnittstelle ausgelegt sind, entsprechende Adapter bekannt, mit denen sich eine Kopplung von unterschiedlichen Datenbussen mit der betreffenden Schnittstelle herstellen lässt. Doch auch diese Alternative weist die genannten Nachteile auf, da für unterschiedliche mit der vorgegebenen Schnittstelle anzuschließende Datenbusse je nach deren jeweiligem Bussystem ein entsprechender Adapter nicht nur vorgesehen sondern auch möglichst leicht zugänglich bereitgestellt werden muss. Beide Lösungen erweisen sich insbesondere dann als nachteilig, wenn viele verschiedene Bussysteme berücksichtigt werden müssen.

Es ist daher die Aufgabe der vorliegenden Erfindung ein Schnittstellenmodul zum Koppeln von Datenbussen, ein System mit einem derartigen Schnittstellenmodul und ein Verfahren zum Koppeln von Datenbussen zu schaffen, mit denen Datenbusse unterschiedlicher Bussysteme platzsparend, kostengünstig und bequem miteinander gekoppelt werden können.

Diese Aufgabe wird durch das Schnittstellenmodul mit den Merkmalen des Anspruchs 1, durch das System mit den Merkmalen des Anspruchs 5 und durch das Verfahren mit den Merkmalen des Anspruchs 8 gelöst. Bevorzugte Ausführungsformen sind Gegenstand der abhängigen Ansprüche.

Gemäß der vorliegenden Erfindung wird ein Schnittstellenmodul oder ein System mit einem Schnittstellenmodul vorgesehen, bei dem der mit dem zweiten Signalleitungsanschluss verbundene erste Signalleitungsanschluss wechselweise mit wenigstens einem anderen zweiten Signalleitungsanschluss verbindbar ist und/oder bei dem der mit dem ersten Signalleitungsanschluss verbundene zweite Signalleitungsanschluss wechselweise mit wenigstens einem anderen ersten Signalleitungsanschluss verbindbar ist. Beim erfindungsgemäßen Verfahren ist dementsprechend ein Verfahrensschritt vorgesehen, bei dem eine Verbindung zwischen einem der ersten Signalleitungsanschlüsse und einem der zweiten Signalleitungsanschlüsse geändert wird, indem der mit dem zweiten Signalleitungsanschluss verbundene erste Signalleitungsanschluss mit einem anderen zweiten Signalleitungsanschluss verbunden wird und/oder indem der mit dem ersten Signalleitungsanschluss verbundene zweite Signalleitungsanschluss mit einem anderen ersten Signalleitungsanschluss verbunden wird.

Obwohl bei der vorliegenden Erfindung erste und zweite Signalleitungsanschlüsse jeweils paarweise miteinander verbunden werden ist somit gleichwohl eine Änderung dieser Verbindung dergestalt möglich, dass in dem Paar miteinander verbundener Signalleitungsanschlüsse der erste Signalleitungsanschluss wechselweise durch einen anderen der ersten Signalleitungsanschlüsse ausgetauscht wird und/oder der zweite Signalleitungsanschluss wechselweise durch einen anderen der zweiten Signalleitungsanschlüsse ausgetauscht wird.

Mit anderen Worten nimmt in dem Paar miteinander verbundener Signalleitungsanschlüsse ein anderer der ersten Signalleitungsanschlüsse die Stelle des mit dem zweiten Signalleitungsanschluss verbundenen ersten Signalleitungsanschlusses ein und ist nach Ändern der Verbindung mit diesem zweiten Signalleitungsanschluss verbunden oder es nimmt in dem Paar miteinander verbundener Signalleitungsanschlüsse ein anderer der zweiten Signalleitungsanschlüsse die Stelle des mit dem ersten Signalleitungsanschluss verbundenen zweiten Signalleitungsanschlusses ein und ist nach Ändern der Verbindung mit diesem ersten Signalleitungsanschluss verbunden oder es nimmt ein anderer der ersten Signalleitungsanschlüsse die Stelle des ersten Signalleitungsanschlusses im Paar miteinander verbundener Signalleitungsanschlüsse ein und es nimmt ein anderer der zweiten Signalleitungsanschlüsse die Stelle des zweiten Signalleitungsanschlusses in diesem Paar ein sodass nach Ändern der Verbindung diese beiden anderen Signalleitungsanschlüsse anstelle der ursprünglich miteinander verbundenen Signalleitungsanschlüsse nunmehr miteinander verbunden sind. Bei der Verbindung handelt es sich dabei bevorzugt um eine elektrisch leitende Verbindung. Auf diese Weise wird ein flexibles Schnittstellenmodul realisiert, dessen Schnittstellenanschlüsse frei einstellbar oder konfigurierbar sind. Mit einem derartigen Schnittstellenmodul lassen sich erste Datenbusse nicht nur dann mit zweiten Datenbussen koppeln, wenn beide Datenbusse jeweils unterschiedlichen Bussystemen angehören, sondern es kann auch ein Datenbus eines vorgegebenen Bussystems mit jeweiligen Datenbussen verschiedener Bussysteme gekoppelt werden, ohne dass hierfür eine Mehrzahl an Steckgesichtern oder Adaptern bereitgestellt werden müsste. Insbesondere für die Miniaturisierung von Schnittstellenmodulen erweist sich die damit einhergehende Platzersparnis als vorteilhaft. Für die Erfindung ist es dabei unerheblich, ob an ersten Signalleitungsanschlüssen, die mit dem zweiten Signalleitungsanschluss verbindbar sind, jeweilige Signalleitungen desselben ersten Datenbusses oder verschiedener erster Datenbusse angeschlossen oder anschließbar sind. Entsprechend können an zweiten Signalleitungsanschlüssen, die mit dem ersten Signalleitungsanschluss verbindbar sind, jeweilige Signalleitungen desselben zweiten Datenbusses oder verschiedener zweiter Datenbusse angeschlossen oder anschließbar sein.

Zum Erreichen dieser Flexibilität beim Verbinden von ersten und zweiten Signalleitungsanschlüssen kann für die Verbindungseinrichtung zum Beispiel ein Multiplexer bzw. ein Multiplexelement vorgesehen sein, der zum Verbinden jeweiliger erster und zweiter Signalleitungsanschlüsse eingerichtet ist. Ebenso kann die Verbindungseinrichtung als ein integrierter Schaltkreis oder ein sogenanntes Field Programmable Gate Array oder FPGA ausgebildet sein bzw. das Schnittstellenmodul oder die Verbindungseinrichtung kann eine FPGA-Schnittstelle oder eine von einem Mikrocontroller über eine Software gesteuerte digitale Schnittstelle aufweisen. Vorteilhafterweise weist ein FPGA Multiplexer-Strukturen auf. Bei den Signalleitungsanschlüssen kann es sich um beliebige Einrichtungen handeln, an denen Signalleitungen von Datenbussen anschließbar sind bzw. die mit Signalleitungen von Datenbussen elektrisch leitend verbindbar sind. Derartigen Einrichtungen können beispielsweise Pins oder Buchsen mit Kontaktelementen sein.

Ferner ist es für die Erfindung unerheblich, welchem Bussystem der erste Datenbus oder die ersten Datenbusse und der zweite Datenbus oder die zweiten Datenbusse angehören oder welches deren Verwendungsart ist. So kann es sich bei dem ersten oder zweiten Datenbus um einen Systembus, einen Speicherbus, einen Peripheriebus, einen Ein-/Ausgabebus oder einen parallelen oder seriellen Datenbus handeln. Auch die Art bzw. Verwendungsart der ersten und zweiten Signalleitungen kann beliebig sein. Beispielsweise ist es unerheblich, ob es sich bei der ersten und zweiten Signalleitung um eine Datenleitung zum Übertragen von Daten oder um eine Taktleitung zum Übertragen von Taktsignalen handelt.

Bevorzugt werden mit dem Schnittstellenmodul erste und zweite Signalleitungsanschlüsse paarweise miteinander verbunden, an denen jeweilige Signalleitungen des ersten Datenbusses und des zweiten Datenbusses von derselben Art angeschlossen sind. Das heißt entweder sind die Signalleitungen des ersten Datenbusses und des zweiten Datenbusses, die jeweils an den miteinander verbundenen ersten und zweiten Signalleitungsanschlüssen angeschlossen sind, beide Datenleitungen oder Taktleitungen.

Im einfachsten Fall kann das Schnittstellenmodul für ein manuelles Auswählen der miteinander zu verbindenden ersten und zweiten Signalleitungsanschlüsse eingerichtet sein bzw. das wechselweise Verbinden von ersten Signalleitungsanschlüssen und zweiten Signalleitungsanschlüssen kann manuell erfolgen. Bevorzugt ist beim Schnittstellenmodul das wechselweise Verbinden von ersten Signalleitungsanschlüssen und zweiten Signalleitungsanschlüssen jedoch automatisch steuerbar und bei einem bevorzugten Verfahren erfolgt das Ändern der Verbindung automatisch. Ein derartiges automatisches wechselweises Verbinden von Signalleitungsanschlüssen vereinfacht erheblich den Betrieb des Schnittstellenmoduls oder Systems sowie das Ausführen des erfindungsgemäßen Verfahrens. Weil ein manuelles Auswählen der zu verbindenden ersten und zweiten Signalleitungsanschlüsse sowie das manuelle Herstellen der Verbindung zwischen diesen durch eine Bedienperson in der Praxis vergleichsweise viel Zeit erfordert und bei einem automatisch gesteuerten Verbinden von ersten und zweiten Signalleitungsanschlüssen entfällt, können mittels derartiger Schnittstellenmodule insbesondere Datenbusse verschiedener Bussysteme wesentlich schneller miteinander gekoppelt werden.

Ganz besonders bevorzugt ist das Schnittstellenmodul dazu eingerichtet, das wechselweise Verbinden von ersten Signalleitungsanschlüssen und zweiten Signalleitungsanschlüssen betreffende Daten von einer externen Datenquelle zu empfangen. Entsprechend empfängt das Schnittstellenmodul bei einem bevorzugten Verfahren Daten, die das Ändern der Verbindung betreffen, von einer externen Datenquelle. Dabei kann die externe Datenquelle eine beliebige Vorrichtung wie zum Beispiel ein einfacher Datenspeicher, ein fester oder mobiler Computer, ein Mobiltelefon, eine Datenbrille oder eine Drohne sein. Das Schnittstellenmodul kann die Daten entweder aktiv von der Datenquelle auslesen oder passiv von dieser empfangen. Besonders vorteilhaft wird die externe Datenquelle jedoch als Teil einer den ersten und/oder den zweiten Datenbus aufweisenden Vorrichtung vorgesehen. Dementsprechend wird auch ein System bevorzugt, bei dem die Vorrichtung dazu eingerichtet ist, das wechselweise Verbinden von ersten Signalleitungsanschlüssen und zweiten Signalleitungsanschlüssen betreffende Daten an das Schnittstellenmodul zu übertragen. Somit sind keine externen Maßnahmen zum Herstellen der Verbindung mehr notwendig, wenn eine Vorrichtung, deren erster oder zweiter Datenbus mit den ersten oder zweiten Signalleitungsanschlüssen verbunden ist oder verbunden werden soll, durch eine andere Vorrichtung ersetzt wird oder wenn ein erster oder zweiter Datenbus einer Vorrichtung erstmals mit den ersten oder zweiten Signalleitungsanschlüssen des Schnittstellenmoduls verbunden werden soll. Indem das Schnittstellenmodul die zum Anschließen von Signalleitungen des ersten oder zweiten Datenbusses der betreffenden Vorrichtung an den ersten oder zweiten Signalleitungsanschlüssen erforderlichen Daten, also beispielsweise die hierfür erforderliche Pinkonfiguration, direkt von der Vorrichtung selber erhält, ist für eine weitgehend vollständige Automatisierung des Kopplungsvorganges zwischen den zu koppelnden Datenbussen gesorgt.

Das Schnittstellenmodul weist vorzugsweise wenigstens eine Steuereinheit und/oder wenigstens eine Lesevorrichtung zum Lesen von RFID-Transpondern (Radio-Frequency Identification) und/oder wenigstens eine Schnittstelle zur Datenübertragung auf und/oder bei dem Schnittstellenmodul ist eine Datenübertragungsverbindung zu einer den ersten Datenbus und/oder den zweiten Datenbus aufweisenden Vorrichtung herstellbar. Dementsprechend weist bei einem bevorzugten System die Vorrichtung wenigstens einen Datenspeicher oder RFID-Transponder zum Speichern von Daten auf und/oder das System ist zum Herstellen einer Datenübertragungsverbindung zwischen dem Schnittstellenmodul und der Vorrichtung eingerichtet. Bei einem bevorzugten Verfahren liest das Schnittstellenmodul die Daten von wenigstens einem Datenspeicher oder RFID-Transponder einer wenigstens einen ersten Datenbus und/oder wenigstens einen zweiten Datenbus aufweisenden Vorrichtung wenigstens teilweise aus und/oder empfängt dieselben über wenigstens eine Schnittstelle zur Datenübertragung wenigstens teilweise und/oder die Daten werden über eine Datenübertragungsverbindung von einer wenigstens einen ersten und/oder wenigstens einen zweiten Datenbus aufweisenden Vorrichtung wenigstens teilweise an das Schnittstellenmodul übertragen.

Bei der Steuereinheit kann es sich beispielsweise um einen Mikrocontroller handeln. Sie kann insbesondere zum automatischen Auswählen von ersten oder zweiten Signalleitungsanschlüssen vorgesehen sein.

Die Lesevorrichtung kann eine beliebige Vorrichtung zum Lesen beliebiger RFID-Transponder sein, die vorzugsweise an Vorrichtungen mit ersten und/oder zweiten Datenbussen angeordnet sind und Daten über vom ersten oder zweiten Datenbus der Vorrichtung benötigte Konfigurationen der ersten oder zweiten Signalleitungsanschlüsse bzw. Pinkonfigurationen enthalten.

Ebenso kann es sich bei der Schnittstelle um eine beliebige Schnittstelle zur Datenübertragung handeln. Beispielsweise kann eine Steuerung des Schnittstellenmoduls über die Schnittstelle von einer externen Vorrichtung aus möglich sein. So kann die Schnittstelle für eine serielle oder eine parallele Datenübertragung an das Schnittstellenmodul oder vom Schnittstellenmodul vorgesehen sein. Die Schnittstelle kann zum Anschließen eines Kabels oder einer Glasfaser eingerichtet sein, oder es kann sich um eine Schnittstelle oder Funkschnittstelle zur drahtlosen Kommunikation oder Datenübertragung handeln. Entsprechend kann die mit der den ersten oder zweiten Datenbus aufweisenden Vorrichtung herstellbare Datenübertragungsverbindung wenigstens teilweise oder vollständig kabelgebunden sein oder sie kann wenigstens teilweise oder vollständig mittels einer Glasfaser hergestellt sein oder sie kann wenigstens teilweise oder vollständig drahtlos sein.

Die Erfindung wird nun nachfolgend unter Bezugnahme auf Zeichnungen näher erläutert. Dabei zeigen:
- Figur 1: ein Schnittstellenmodul in schematischer Darstellung;
- Figur 2: das Schnittstellenmodul der Figur 1 mit daran angeschlossenen Datenbussen;
- Figur 3a): ein Steckgesicht eines Schnittstellenmoduls in einer ersten spezifischen Konfiguration;
- Figur 3b): das Steckgesicht der Figur 3a) in einer zweiten spezifischen Konfiguration;
- Figur 4: ein Schnittstellenmodul mit Steuereinheit und Schnittstelle zur Datenübertragung;
- Figur 5: ein System mit dem Schnittstellenmodul der Figur 4 und einer Vorrichtung.

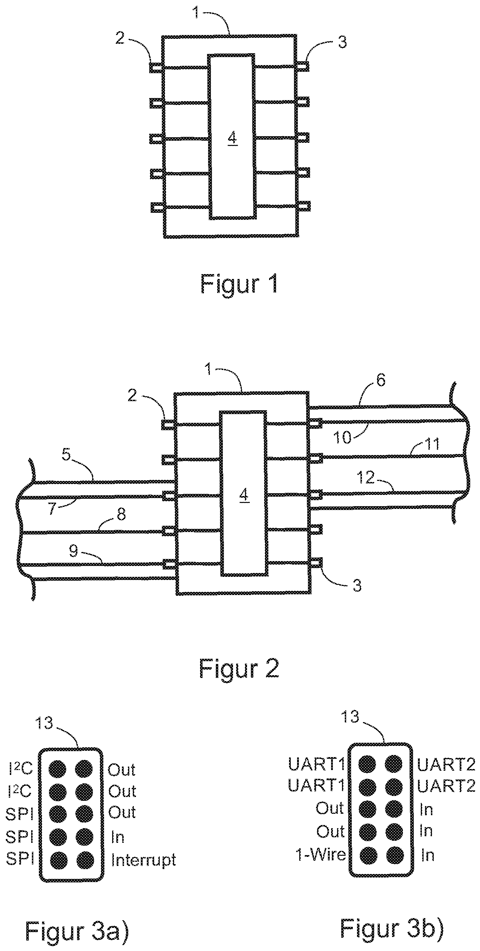

In der Figur 1 ist ein Schnittstellenmodul 1 mit ersten Signalleitungsanschlüssen oder Pins 2 gezeigt, die in ihrer Gesamtheit ein erstes Steckgesicht des Schnittstellenmoduls 1 bilden. Eine Mehrzahl an zweiten Signalleitungsanschlüssen oder Pins 3 bildet in ihrer Gesamtheit ein zweites Steckgesicht des Schnittstellenmoduls 1. Das erste Steckgesicht mit den Pins 2 und das zweite Steckgesicht mit den Pins 3 sind vorliegend an einander entgegengesetzten Seiten des Schnittstellenmoduls 1 angeordnet. Sowohl die Pins 2 des ersten Steckgesichtes als auch die Pins 3 des zweiten Steckgesichtes stehen mit einer Verbindungseinrichtung des Schnittstellenmoduls 1 in Verbindung, bei dem es sich im vorliegenden Fall um einen Multiplexer 4 handelt. Mittels des Multiplexers 4 ist jeder einzelne der Pins 2 des ersten Steckgesichts wechselweise mit jedem einzelnen der Pins 3 des zweiten Steckgesichts verbindbar. Mit anderen Worten sind Pins 2 des ersten Steckgesichts und Pins 3 des zweiten Steckgesichts paarweise miteinander verbindbar, wobei einer der Pins 2 des ersten Steckgesichts mit einem der Pins 3 des zweiten Steckgesichts elektrisch verbunden wird. Es können mehrere derartige aus Pins 2 des ersten Steckgesichts und Pins 3 des zweiten Steckgesichts gebildete Paare gebildet werden, deren jeweilige Pins 2 und 3 miteinander verbunden sind.

Obwohl das Schnittstellenmodul 1 im vorliegenden Fall jeweils fünf erste Pins 2 und fünf zweite Pins 3 aufweist, ist die Anzahl der Pins 2 und 3 nicht auf diese Anzahl beschränkt und kann ganz allgemein beliebig sein. Insbesondere kann das Schnittstellenmodul 1 auch nur einen einzigen Pin 2 oder nur einen einzigen Pin 3 aufweisen.

Mit dem Schnittstellenmodul 1 können zwei oder mehrere Datenbusse selbst dann miteinander gekoppelt werden, wenn die Datenbusse verschiedenen Bussystemen angehören. Hierzu zeigt die Figur 2 wie das Schnittstellenmodul 1 beispielhaft einen ersten Datenbus 5 mit einem zweiten Datenbus 6 koppelt. Der erste Datenbus 5 weist eine erste Signalleitung 7, eine zweite Signalleitung 8 und eine dritte Signalleitung 9 auf, von denen jede an einem jeweiligen der in der Figur 2 untersten drei Pins 2 angeschlossen ist. Hingegen weist der zweite Datenbus 6 eine erste Signalleitung 10, eine zweite Signalleitung 11 und eine dritte Signalleitung 12 auf, von denen jede an einem jeweiligen der in der Figur 2 obersten drei Pins 3 angeschlossen ist.

Zur Kopplung des ersten Datenbusses 5 und des zweiten Datenbusses 6 muss die erste Signalleitung 7 des ersten Datenbusses 5 mit der ersten Signalleitung 10 des zweiten Datenbusses 6, die zweite Signalleitung 8 des ersten Datenbusses 5 muss mit der zweiten Signalleitung 11 des zweiten Datenbusses 6 und die dritte Signalleitung 9 des ersten Datenbusses 5 muss mit der dritten Signalleitung 12 des zweiten Datenbusses 6 verbunden werden. Aus diesem Grund verbindet der Multiplexer 4 den in der Figur 2 von oben gezählt dritten der Pins 2, an dem die erste Signalleitung 7 des ersten Datenbusses 5 angeschlossen ist, mit dem in der Figur 2 von oben gezählt ersten der Pins 3, an dem die erste Signalleitung 10 des zweiten Datenbusses 6 angeschlossen ist, sowie den in der Figur 2 von oben gezählt vierten der Pins 2, an dem die zweite Signalleitung 8 des ersten Datenbusses 5 angeschlossen ist, mit dem in der Figur 2 von oben gezählt zweiten der Pins 3, an dem die zweite Signalleitung 11 des zweiten Datenbusses 6 angeschlossen ist, sowie den in der Figur 2 untersten der Pins 2, an dem die dritte Signalleitung 9 des ersten Datenbusses 5 angeschlossen ist, mit dem in der Figur 2 von oben gezählt dritten der Pins 3, an dem die dritte Signalleitung 12 des zweiten Datenbusses 6 angeschlossen ist.

Anstatt die Signalleitungen 10, 11 und 12 des zweiten Datenbusses 6 jeweils an den in der Figur 2 obersten drei der Pins 3 anzuschließen könnten dieselben beispielsweise ebenso an den in der Figur 2 untersten drei der Pins 3 angeschlossen werden, beispielsweise die erste Signalleitung 10 am drittuntersten der Pins 3, die zweite Signalleitung 11 am zweituntersten der Pins 3 und die Signalleitung 12 am untersten der Pins 3. In diesem Fall würde der Multiplexer 3 zur Kopplung des ersten Datenbusses 5 mit dem zweiten Datenbus 6 den drittuntersten der Pins 2 mit dem drittuntersten der Pins 3 koppeln sowie den zweituntersten der Pins 2 mit dem zweituntersten der Pins 3 und den untersten der Pins 2 mit dem untersten der Pins 3.

Da der Multiplexer 4 jeden der ersten Pins 2 mit jedem der zweiten Pins 3 verbinden kann ist es möglich, die Signalleitungen 7, 8 und 9 des ersten Datenbusses 5 und die Signalleitungen 10, 11 und 12 des zweiten Datenbusses 6 an beliebigen der Pins 2 oder 3 anzuschließen. Je nachdem an welchen der Pins 2 oder 3 die Signalleitungen 7-12 in einem konkreten Fall angeschlossen werden, lassen sich mit dem Multiplexer 4 die für die Kopplung der Datenbusse 5 und 6 notwendigen Verbindungen zwischen den Pins 2 oder 3 herstellen. Dabei müssen im Allgemeinen weder die Anzahl der Signalleitungen der miteinander gekoppelten Datenbusse übereinstimmen, noch müssen die Datenbusse demselben Bussystem angehören bzw. von derselben Art sein. Es ist mit dem Schnittstellenmodul 1 ferner möglich, Signalleitungen eines Datenbusses mit Signalleitungen zu verbinden, die zu verschiedenen Datenbussen gehören. Beispielsweise können zwei an jeweiligen der Pins 3 angeschlossene Signalleitungen desselben Datenbusses vom Multiplexer 4 mit an jeweiligen der Pins 2 angeschlossenen Signalleitungen verbunden werden, auch wenn die an den jeweiligen der Pins 2 angeschlossenen Signalleitungen zu jeweils verschiedenen Datenbussen gehören. Insgesamt ergibt sich dadurch eine hohe Flexibilität des Schnittstellenmoduls 1.

In der Figur 3a) ist hierzu ein Steckgesicht eines Schnittstellenmoduls 13 mit insgesamt zehn Signalleitungsanschlüssen dargestellt, die in zwei senkrechten und zueinander parallelen Reihen zu jeweils fünf frei konfigurierbaren Signalleitungsanschlüssen angeordnet sind. Das Schnittstellenmodul 13 ist in der Figur 3a) durch entsprechendes Verbinden der Signalleitungsanschlüsse derart konfiguriert, dass an den Signalleitungsanschlüssen des gezeigten Steckgesichtes unterschiedliche Funktionen zur Verfügung stehen. So bieten die beiden oberen Signalleitungsanschlüsse der linken Reihe die Funktion eines als I2C bezeichneten seriellen Datenbusses, der hauptsächlich geräteintern für die Kommunikation zwischen verschiedenen Schaltungsteilen wie zum Beispiel einer Steuereinheit und peripheren Schaltkreisen verwendet wird. Die darunterliegenden drei Signalleitungsanschlüsse sind dagegen einem sogenannten Serial Peripheral Interface oder SPI zugeordnet, was ein synchroner serieller Datenbus mit drei Leitungen ist, mit dem digitale Schaltungen nach dem Master-Slave-Prinzip miteinander verbunden werden können. Bei den drei oberen Signalleitungsanschlüssen der rechten Reihe handelt es sich jeweils um Signalausgänge, während der darunterliegende Signalleitungsanschluss ein Signaleingang ist. Schließlich ist der unterste Signalleitungsanschluss der rechten Reihe für eine sogenannte Unterbrechungsanforderung oder einen Interrupt vorgesehen.

Figur 3b) zeigt dasselbe Schnittstellenmodul 13 nach erfolgter Umkonfiguration der Signalleitungsanschlüsse. Nunmehr sind die beiden obersten Signalleitungsanschlüsse der linken Reihe für eine erste UART-Schnittstelle (Universal Asynchronous Receiver Transmitter) vorgesehen, die zum Senden und Empfangen von Daten über eine Datenleitung dient. Darunter sind zwei Signalleitungsanschlüsse als Signalausgang vorgesehen. Hingegen ist der unterste Signalleitungsanschluss der linken Reihe als Eindraht-Bus, also als eine serielle Schnittstelle, eingerichtet. Auch die obersten beiden Signalleitungsanschlüsse der rechten Reihe sind für eine UART-Schnittstelle, genauer für eine zweite UART-Schnittstelle, vorgesehen, während die drei darunterliegenden Signalleitungsanschlüsse als Signaleingänge vorgesehen sind.

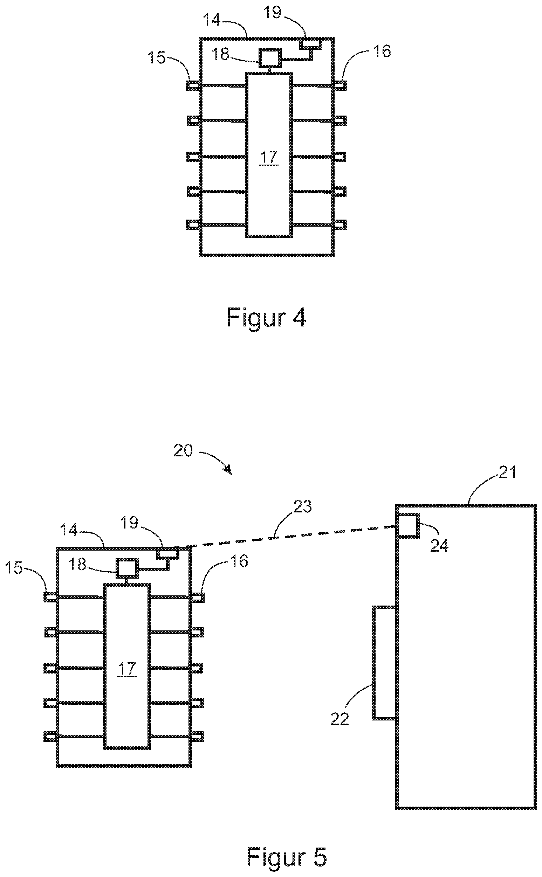

Besonders vorteilhaft ist das in der Figur 4 gezeigte Schnittstellenmodul 14, das zusätzlich zu Pins 15 eines ersten Steckgesichtes und Pins 16 eines zweiten Steckgesichtes sowie einem Multiplexer 17 darüber hinaus eine mit dem Multiplexer 17 verbundene Steuereinheit 18 und eine Schnittstelle 19 zur Datenübertragung aufweist. Bei dem Schnittstellenmodul 14 wird das paarweise Verbinden jeweiliger Pins 15 und 16 und damit das Konfigurieren der jeweiligen Steckgesichter über von der Steuereinheit 18 ausgegebene Steuerbefehle gesteuert, wobei die Steuereinheit 18 wiederum über die Schnittstelle 19 von externer Stelle aus programmiert oder gesteuert werden kann oder darüber für die Herstellung der Verbindungen bzw. die Konfigurierung der Steckgesichter relevante Daten erhalten kann.

Das Schnittstellenmodul 14 ist in der Figur 5 als Teil eines Systems 20 gezeigt, zu dem außer dem Schnittstellenmodul 14 eine Vorrichtung 21 gehört. Die Vorrichtung 21 weist einen Datenbus 22 mit Signalleitungen auf, die an den Pins 16 des Schnittstellenmoduls 14 anschließbar sind. Sie ist vorliegend dazu eingerichtet, eine in der Figur 5 gestrichelt dargestellte Datenübertragungsverbindung 23 mit dem Schnittstellenmodul 14 bzw. dessen Schnittstelle 19 herzustellen. So kann die Steuereinheit 18 über die Datenübertragungsverbindung 23 und die Schnittstelle 19 auf der Vorrichtung 21 gespeicherte Daten über die zum Anschließen der Signalleitungen des Datenbusses 22 an den Pins 16 benötigte Konfiguration der Pins 16 erhalten oder auslesen. Diese Daten können beispielsweise in einem Datenspeicher 24 der Vorrichtung 21 abgelegt sein oder in einem RFID-Transponder. Im letzteren Fall verfügt das Schnittstellenmodul 14 über eine Leseeinrichtung zum Lesen des RFID-Transponders. Gemäß den von der Vorrichtung 21 erhaltenen Daten wird der Multiplexer 17 von der Steuereinheit 18 nun so gesteuert, dass entsprechende Verbindungen zwischen Paaren von Pins 15 und 16 hergestellt werden, sodass die Gesamtheit der Pins 16 oder das von diesen gebildete Steckgesicht 5 die von den Signalleitungen des Datenbusses 22 benötigte Konfiguration aufweist. Das aus dem Schnittstellenmodul 14 und der Vorrichtung 21 gebildete System 20 ist somit in der Lage, notwendige Konfigurationen der Pins 15 und 16 im Wesentlichen automatisch vorzunehmen.

### Bezugszeichenliste

- 1.: Schnittstellenmodul
- 2.: Pins
- 3.: Pins
- 4.: Multiplexer
- 5.: erster Datenbus
- 6.: zweiter Datenbus
- 7.: erster Signalleitung
- 8.: zweite Signalleitung
- 9.: dritte Signalleitung
- 10.: erste Signalleitung
- 11.: zweite Signalleitung
- 12.: dritte Signalleitung
- 13.: Schnittstellenmodul
- 14.: Schnittstellenmodul
- 15.: Pins
- 16.: Pins
- 17.: Multiplexer
- 18.: Steuereinheit
- 19.: Schnittstelle
- 20.: System
- 21.: Vorrichtung
- 22.: Datenbus
- 23.: Datenübertragungsverbindung
- 24.: Datenspeicher

## Patentansprüche

1. Schnittstellenmodul (1, 13, 14) zum Koppeln von Datenbussen (5, 6, 22) mit ersten Signalleitungsanschlüssen (2, 15), an die Signalleitungen (7, 8, 9) wenigstens eines ersten Datenbusses (5) anschließbar sind, **dadurch gekennzeichnet, dass** das Schnittstellenmodul (1, 13, 14) zum Koppeln von Datenbussen (5, 6, 22) mit zweiten Signalleitungsanschlüssen (3, 16), an die Signalleitungen (10, 11, 12) wenigstens eines zweiten Datenbusses (6, 22) anschließbar sind, das wenigstens eine Verbindungseinrichtung (4, 17) zum Herstellen wenigstens einer Verbindung zwischen einem der ersten Signalleitungsanschlüsse (2, 15) und einem der zweiten Signalleitungsanschlüsse (3, 16) aufweist, wobei der mit dem zweiten Signalleitungsanschluss (3, 16) verbundene erste Signalleitungsanschluss (2, 15) wechselweise mit wenigstens einem anderen zweiten Signalleitungsanschluss (3, 16) verbindbar ist, an den eine Signalleitung eines vom zweiten Datenbus (6, 22) verschiedenen Datenbusses anschließbar ist. und/oder wobei der mit dem ersten Signalleitungsanschluss (2, 15) verbundene zweite Signalleitungsanschluss (3, 16) wechselweise mit wenigstens einem anderen ersten Signalleitungsanschluss (2, 15) verbindbar ist, an den eine Signalleitung eines vom ersten Datenbus (5) verschiedenen Datenbusses anschließbar ist.

2. Schnittstellenmodul (1, 13, 14) nach Anspruch 1, bei dem das wechselweise Verbinden von ersten Signalleitungsanschlüssen (2, 15) und zweiten Sigrialleitungsanschlüssen (3, 16) automatisch steuerbar ist.

3. Schnittstellenmodul (14) nach Anspruch 1 oder 2, das dazu eingerichtet ist, das wechselweise Verbinden von ersten Signalleitungsanschlüssen (15) und zweiten Signalleitungsanschlüssen (16) betreffende Daten von einer externen Datenquelle zu empfangen.

4. Schnittstellenmodul (14) nach einem der vorhergehenden Ansprüche mit wenigstens einer Steuereinheit (18) und/oder wenigstens einer Lesevorrichtung zum Lesen von RFID-Transpondern und/oder wenigstens einer Schnittstelle (19) zur Datenübertragung und/oder bei dem eine Datenübertragungsverbindung (23) zu einer den ersten Datenbus und/oder den zweiten Datenbus (22) aufweisenden Vorrichtung (21) herstellbar ist.

5. System (20) mit wenigstens einem Schnittstellenmodul (14) nach einem der vorhergehenden Ansprüche und wenigstens einer Vorrichtung (21), die wenigstens einen ersten Datenbus und/oder wenigstens einen zweiten Datenbus (22) aufweist.

6. System (20) nach Anspruch 5, bei dem die Vorrichtung (21) dazu eingerichtet ist, das wechselweise Verbinden von ersten Signalleitungsanschlüssen (15) und zweiten Signalleitungsanschlüssen (16) betreffende Daten an das Schnittstellenmodul (14) zu übertragen.

7. System (20) nach Anspruch 5 oder 6, bei dem die Vorrichtung (21) wenigstens einen Datenspeicher (24) oder RFID-Transponder zum Speichern von Daten aufweist und/oder das zum Herstellen einer Datenübertragungsverbindung (23) zwischen dem Schnittstellenmodul (14) und der Vorrichtung (21) eingerichtet ist.

8. Verfahren zum Koppeln von Datenbussen (5, 6, 22) mittels eines Schnittstellenmoduls (1, 13, 14) mit dem Schritt Anschließen von Signalleitungen (7, 8, 9) wenigstens eines ersten Datenbusses (5) an erste Signalleitungsanschlüsse (2, 15) des Schnittstellenmoduls (1, 13, 14), gekennzeichnet mit den Schritten Anschließen von Signalleitungen (10, 11, 12) wenigstens eines zweiten Datenbusses (6, 22) an zweite Signalleitungsanschlüsse (3, 16) des Schnittstellenmoduls (1, 13, 14), Herstellen wenigstens einer Verbindung zwischen einem der ersten Signalleitungsanschlüsse (2, 15) und einem der zweiten Signalleitungsanschlüsse (3, 16), und Ändern der Verbindung, indem der mit dem zweiten Signalleitungsanschluss (3, 16) verbundene erste Signalleitungsanschluss (2, 15) mit einem anderen zweiten Signalleitungsanschluss (3, 16) verbunden wird , an den eine Signalleitung eines vom zweiten Datenbus (6, 22) verschiedenen Datenbusses anschließbar ist, und/oder indem der mit dem ersten Signalleitungsanschluss (2, 15) verbundene zweite Signalleitungsanschluss (3, 16) mit einem anderen ersten Signalleitungsanschluss (2, 15) verbunden wird, an den eine Signalleitung eines vom ersten Datenbus (5) verschiedenen Datenbusses anschließbar ist.

9. Verfahren nach Anspruch 8, bei dem das Ändern der Verbindung automatisch erfolgt.

10. Verfahren nach einem der Ansprüche 8 oder 9, bei dem das Schnittstellenmodul (14) Daten, die das Ändern der Verbindung betreffen, von einer externen Datenquelle empfängt.

11. Verfahren nach Anspruch 10, bei dem das Schnittstellenmodul (14) die Daten von wenigstens einem Datenspeicher (24) oder RFID-Transponder einer wenigstens einen ersten Datenbus und/oder wenigstens einen zweiten Datenbus (22) aufweisenden Vorrichtung (21) wenigstens teilweise ausliest und/oder über wenigstens eine Schnittstelle (19) zur Datenübertragung wenigstens teilweise empfängt und/oder bei dem die Daten über eine Datenübertragungsverbindung (23) von einer wenigstens einen ersten Datenbus und/oder wenigstens einen zweiten Datenbus (22) aufweisenden Vorrichtung (21) wenigstens teilweise an das Schnittstellenmodul (14) übertragen werden.

## Claims

1. Interface module (1, 13, 14) for coupling data buses (5, 6, 22) to first signal line ports (2, 15) to which signal lines (7, 8, 9) of at least a first data bus (5) are connectable, **characterized in that** the interface module (1, 13, 14) for coupling data buses (5, 6, 22) to second signal line ports (3, 16) to which signal lines (10, 11, 12) of at least a second data bus (6, 22) are connectable,
said module comprising at least one connecting means (4, 17) for establishing at least one connection between one of the first signal line ports (2, 15) and one of the second signal line ports (3, 16),
wherein the first signal line port (2, 15) connected to the second signal line port (3, 16) is alternately connectable to at least one other second signal line port (3, 16) to which a signal line of a data bus which is different from the second data bus (6, 22) is connectable, and/or wherein the second signal line port (3, 16) connected to the first signal line port (2, 15) is alternately connectable to at least one other first signal line port (2, 15) to which a signal line of a data bus which is different from the first data bus (5) is connectable.

2. Interface module (1, 13, 14) according to Claim 1, in which the alternating connection of first signal line ports (2, 15) and second signal line ports (3, 16) is automatically controllable.

3. Interface module (14) according to Claim 1 or 2, which is configured to receive data relating to the alternating connection of first signal line ports (15) and second signal line ports (16) from an external data source.

4. Interface module (14) according to one of the preceding claims, comprising at least one control unit (18) and/or at least one reading device for reading RFID transponders and/or at least one interface (19) for data transmission, and/or in which a data transmission connection (23) can be established to a device (21) comprising the first data bus and/or the second data bus (22).

5. System (20) comprising at least one interface module (14) according to one of the preceding claims, and at least one device (21) which comprises at least a first data bus and/or at least a second data bus (22).

6. System (20) according to Claim 5, in which the device (21) is configured to transmit data to the interface module (14) relating to the alternating connection of first signal line ports (15) and second signal line ports (16).

7. System (20) according to Claim 5 or 6, in which the device (21) comprises at least one data memory (24) or RFID transponder for storing data, and/or which is configured for establishing a data transmission connection (23) between the interface module (14) and the device (21).

8. Method for coupling data buses (5, 6, 22) by means of an interface module (1, 13, 14), comprising the step of:
connecting signal lines (7, 8, 9) of at least a first data bus (5) to first signal line ports (2, 15) of the interface module (1, 13, 14),
**characterized by** having the steps of:
connecting signal lines (10, 11, 12) of at least a second data bus (6, 22) to second signal line ports (3, 16) of the interface module (1, 13, 14), establishing at least one connection between one of the first signal line ports (2, 15) and one of the second signal line ports (3, 16), and
changing the connection, in that the first signal line port (2, 15) connected to the second signal line port (3, 16) is connected to another second signal line port (3, 16) to which a signal line of a data bus which is different from the second data bus (6, 22) is connectable, and/or in that the second signal line port (3, 16) connected to the first signal line port (2, 15) is connected to another first signal line port (2, 15) to which a signal line of a data bus which is different from the first data bus (5) is connectable.

9. Method according to Claim 8, in which the changing of the connection takes place automatically.

10. Method according to either of Claims 8 and 9, in which the interface module (14) receives data, which relate to the changing of the connection, from an external data source.

11. Method according to Claim 10, in which the interface module (14) at least partially reads out the data from at least one data memory (24) or RFID transponder of a device (21) comprising at least a first data bus and/or at least a second data bus (22), and/or at least partially receives said data via at least one interface (19) for data transmission; and/or in which the data are at least partially transmitted to the interface module (14) from a device (21) comprising at least a first data bus and/or at least a second data bus (22), via a data transmission connection (23).

## Revendications

1. Module d'interface (1, 13, 14) permettant de coupler des bus de données (5, 6, 22) à des premières bornes de ligne de signal (2, 15), auxquels peuvent être connectées des lignes de signal (7, 8, 9) d'au moins un premier bus de données (5), **caractérisé en ce que** le module d'interface (1, 13, 14) permettant de coupler des bus de données (5, 6, 22) à des deuxièmes bornes de ligne de signal (3, 16), auxquels sont connectées des lignes de signal (10, 11, 12) d'au moins un deuxième bus de données (6, 22), qui comporte au moins un dispositif de connexion (4, 17) permettant d'établir au moins une liaison entre l'une des premières bornes de ligne de signal (2, 15) et l'une des deuxièmes bornes de ligne de signal (3, 16),
dans lequel la première borne de ligne de signal (2, 15) reliée à la deuxième borne de ligne de signal (3, 16) peut être reliée alternativement à au moins une autre deuxième borne de ligne de signal (3, 16) à laquelle peut être connectée une ligne de signal d'un bus de données différent du deuxième bus de données (6, 22),
et/ou dans lequel la deuxième borne de ligne de signal (3, 16) reliée à la première borne de ligne de signal (2, 15) peut être reliée alternativement à au moins une autre première borne de ligne de signal (2, 15) à laquelle peut être connectée une ligne de signal d'un bus de données différent du premier bus de données (5).

2. Module d'interface (1, 13, 14) selon la revendication 1, dans lequel la liaison alternée des premières bornes de ligne de signal (2, 15) et des deuxièmes bornes de ligne de signal (3, 16) peut être commandée automatiquement.

3. Module d'interface (14) selon la revendication 1 ou 2, conçu pour recevoir d'une source de données externe des données relatives à la liaison alternée de premières bornes de ligne de signal (15) et de deuxièmes bornes de ligne de signal (16).

4. Module d'interface (14) selon l'une des revendications précédentes, comprenant au moins une unité de commande (18) et/ou au moins un dispositif de lecture permettant de lire des transpondeurs RFID et/ou au moins une interface (19) permettant de transmettre des données et/ou dans lequel une liaison de transmission de données (23) peut être établie avec un dispositif (21) comportant le premier bus de données et/ou le deuxième bus de données (22) .

5. Système (20) comportant au moins un module d'interface (14) selon l'une des revendications précédentes et au moins un dispositif (21) qui comporte au moins un premier bus de données et/ou au moins un deuxième bus de données (22).

6. Système (20) selon la revendication 5, dans lequel le dispositif (21) est conçu pour transmettre au module d'interface (14) des données relatives à la liaison alternée de premières bornes de ligne de signal (15) et de deuxièmes bornes de ligne de signal (16).

7. Système (20) selon la revendication 5 ou 6, dans lequel le dispositif (21) comporte au moins une mémoire de données (24) ou au moins un transpondeur RFID permettant de stocker des données et/ou qui est conçu pour établir une liaison de transmission de données (23) entre le module d'interface (14) et le dispositif (21).

8. Procédé permettant de coupler des bus de données (5, 6, 22) au moyen d'un module d'interface (1, 13, 14), comprenant l'étape consistant à
connecter des lignes de signal (7, 8, 9) d'au moins un premier bus de données (5) à des premières bornes de ligne de signal (2, 15) du module d'interface (1, 13, 14), **caractérisé par** les étapes consistant à connecter des lignes de signal (10, 11, 12) d'au moins un deuxième bus de données (6, 22) à des deuxièmes lignes de signal (3, 16) du module d'interface (1, 13, 14), établir au moins une liaison entre l'une des premières bornes de ligne de signal (2, 15) et l'une des deuxièmes bornes de ligne de signal (3, 16), et
modifier la liaison en reliant la première borne de ligne de signal (2, 15) reliée à la deuxième borne de ligne de signal (3, 16) à une autre deuxième borne de ligne de signal (3, 16) à laquelle peut être connectée une ligne de signal d'un bus de données différent du deuxième bus de données (6, 22), et/ou en reliant la deuxième borne de ligne de signal (3, 16) reliée à la première borne de ligne de signal (2, 15) à une autre première borne de ligne de signal (2, 15) à laquelle peut être connectée une ligne de signal d'un bus de données différent du premier bus de données (5).

9. Procédé selon la revendication 8, dans lequel la modification de la liaison est effectuée automatiquement.

10. Procédé selon l'une des revendications 8 ou 9, dans lequel le module d'interface (14) reçoit d'une source de données externe des données relatives à la modification de la liaison.

11. Procédé selon la revendication 10, dans lequel le module d'interface (14) lit au moins partiellement et/ou reçoit au moins partiellement par l'intermédiaire d'au moins une interface (19) permettant de transmettre des données les données d'au moins une mémoire de données (24) ou d'un transpondeur RFID d'un dispositif (21) comportant au moins un premier bus de données et/ou au moins un deuxième bus de données (22) et/ou dans lequel les données sont transmises au moins partiellement par l'intermédiaire d'une liaison de transmission de données (23) d'un dispositif (21) comportant au moins un premier bus de données et/ou au moins un deuxième bus de données (22) au module d'interface (14).
